# EUROPÄISCHE PATENTSCHRIFT

(11) **EP 0 611 609 B1**
(45) Veröffentlichungstag und Bekanntmachung des Hinweises auf die Patenterteilung: **06.11.1996**
(21) Anmeldenummer: 94100041.6
(22) Anmeldetag: 04.01.1994
(51) Int. Cl.: B09B 3/00, C03B 3/02, C03B 5/03, C03B 5/235

(54) **Verfahren zum Verglasen von Abfallstoffen und Vorrichtung zur Durchführung dieses Verfahrens**
Method for vitrifying residues and apparatus therefor
Procédé de vitrification de déchets et dispositif de mise en oeuvre

(30) Priorität: 20.01.1993 DE 4301353
(43) Veröffentlichungstag der Anmeldung: 24.08.1994
(73) Patentinhaber: Beteiligungen Sorg GmbH & Co. KG, D-97816 Lohr (DE)
(72) Erfinder: Pieper, Helmut, Dipl.-Ing., D-97816 Lohr/Main (DE)
(74) Vertreter: Schulze Horn, Stefan, Dipl.-Ing. M.Sc.

(56) Entgegenhaltungen:
- EP-A- 0 211 977
- EP-A- 0 233 647
- EP-A- 0 255 606
- EP-A- 0 359 003
- EP-A- 0 515 792
- DE-A- 4 000 358
- DE-A- 4 035 049
- US-A- 5 032 161

## Beschreibung

Die Erfindung betrifft ein Verfahren nach dem Oberbegriff des Anspruchs 1 sowie eine Vorrichtung zur Durchführung dieses Verfahrens.

Verfahren dieser Art sind bereits bekannt, wobei nach der DE-A-3 904 613 der Anmelderin bei der Verglasung von Abfallstoffen die bei der Abgasreinigung anfallenden Stäube oder Schlämme dem Prozeß durch Zumischung zu dem Gemenge wieder zugeführt werden sollen.

Bei diesem Verfahren entstehen nachteilig, wenn der einzuschmelzende Abfallstoff größere Mengen an Kohlenstoff enthält, bei der Rückführung der Stäube oder Schlämme erhebliche Probleme. Beim Einschmelzen von Aschen mit hohem Kohlenstoffanteil kann sich nämlich auf der elektrisch beheizten Glasschmelze ein fluidisierendes Bett bilden, woraus ein erheblicher Staubaustrag innerhalb des Abgases resultiert.

Die Vorrichtungen zur Durchführung der entsprechenden Verfahren sind weiterhin nicht für einen störungsfreien, kontinuierlichen Betrieb geeignet und es bestehen Schwierigkeiten, nicht nur die Energie der Abgase vollständig zu nutzen, sondern auch eine vollständige Reinigung zu erreichen.

Aus der DE-A-3 841 889 ist ein Verfahren zur Überführung von festen, weitgehend wasserfreien Abfallstoffen in Glasform bekannt, wobei die Abfallstoffe mit einem oder mehreren Zuschlagstoffen zu einem aufzuschmelzenden Gemenge vermischt werden, wobei das Gemenge durch Wärmezufuhr zum größten Teil zu einer Glasschmelze aufgeschmolzen und zu einem kleinen Teil als aus dem schmelzendem Gemenge austretendes Abgas abgeführt wird, wobei aus der Glasschmelze durch Gießen und Abkühlen feste Glaskörper erzeugt werden, wobei als Abfallstoff Müllverbrennungsasche verwendet wird, wobei das unter Abschluß gegen die Umgebungsluft abgezogene heiße Abgas in das aufzuschmelzende Gemenge zurückgeführt und dort auf 20 bis 50°C abgekühlt wird, wobei die bei der Abkühlung anfallenden Kondensationsprodukte mit dem Gemenge aufgeschmolzen werden und wobei das aus dem aufzuschmelzenden Gemenge austretende kalte Abgas einer Gasreinigung nach einem an sich bekannten Schadgas-Reinigungsverfahren unterzogen wird.

Eine Vorrichtung zur Durchführung des Verfahrens nach DE-A-3 841 889 ist gekennzeichnet durch einen geschlossenen Gemengemischer mit einem Feststoffeinlaß für die Aufgabe der zu mischenden Müllverbrennungsasche und Zuschlagstoffe, mit einem Feststoffauslaß für die Abgabe des fertigen, aufzuschmelzenden Gemenges sowie mit einem Gaseinlaß und einem Gasauslaß, einen geschlossenen Glasschmelzofen mit einer Gemengeaufgabevorrichtung am einen Ofenende, welche mit dem Feststoffauslaß des Gemengemischers verbunden ist, mit wenigstens einer Abgas-Abzugsöffnung und mit einem am anderen Ofenende angeordneten Glasschmelzauslauf, und eine Gasreinigungseinrichtung, deren Eingang mit dem Gasauslaß des Gemengemischers verbunden ist.

Nachteilig bei diesem Verfahren und der Vorrichtung ist, daß es nicht für Abfallstoffe geeignet ist, die größere Anteile von Kohlenstoff enthalten, da keine Nachverbrennung vorgesehen ist, und daß das Abgas energiemäßig nicht vollständig ausgenutzt wird.

Es ist jetzt Aufgabe der Erfindung, ein Verfahren zum Verglasen von Abfallstoffen zu finden, die auch größere Anteile von Kohlenstoff enthalten können, bei welchem die Energie des Abgases vollständig genutzt wird, nur geringe Mengen Abgas auftreten, das zudem vollständig gereinigt werden kann und bei dem der apparative Aufwand für einen störungsfreien, kontinuierlichen Betrieb gering gehalten werden kann.

Der Betrieb der entsprechenden Vorrichtungen soll weiterhin auch von ungeübtem Personal beherrschbar sein.

Diese Aufgabe wird bei dem eingangs genannten Verfahren dadurch gelöst, daß das Abgas aus der Nachverbrennung zur Aufheizung der Gemengebestandteile einem Gemengevorwärmer zugeführt wird, der schräg von oben außen nach unten innen verlaufende, als Leitkörper für das Schüttgut dienende Kammern aufweist, die von Luft durchströmt werden, und darin von Kaltluft gekühlt wird, daß die in dem Gemengevorwärmer erhitzte Luft mit einer Temperatur zwischen 150°C und 400°C, vorzugsweise ca. 200°C austritt, und in einem Teilstrom der Nachverbrennung zugeführt wird und daß das Abgas danach einer Gaswäsche sowie einer Endreinigung zugeführt wird.

Weitere vorteilhafte Ausgestaltungen des erfindungsgemäßen Verfahrens sind in den Unteransprüchen 2 - 4 angegeben.

Die Vorrichtung zur Durchführung des Verfahrens kennzeichnet sich vorteilhaft dadurch, daß sie einen Gaswäscher aufweist, mindestens einen Aktivkohlefilter und einen Gemengevorwärmer, wobei die Luft mit einer Temperatur zwischen 150°C und 400°C, insbesondere ca. 200°C aus dem Gemengevorwärmer austritt.

Da das erfindungsgemäße Verfahren und die erfindungsgemäße Vorrichtung erstmalig die schwierige Verarbeitung von kohlenstoffhaltigen Abfallstoffen lösen, kann von einer erheblichen Minderung der durch Abfallstoffe auftretenden Umweltbelastung ausgegangen werden, zumal die Abgasmengen nicht wie üblich durch Quenchen erheblich vergrößert werden.

Im folgenden wird ein Ausführungsbeispiel des erfindungsgemäßen Verfahrens und der erfindungsgemäßen Vorrichtung anhand von einer Zeichnung näher beschrieben. Es zeigt:

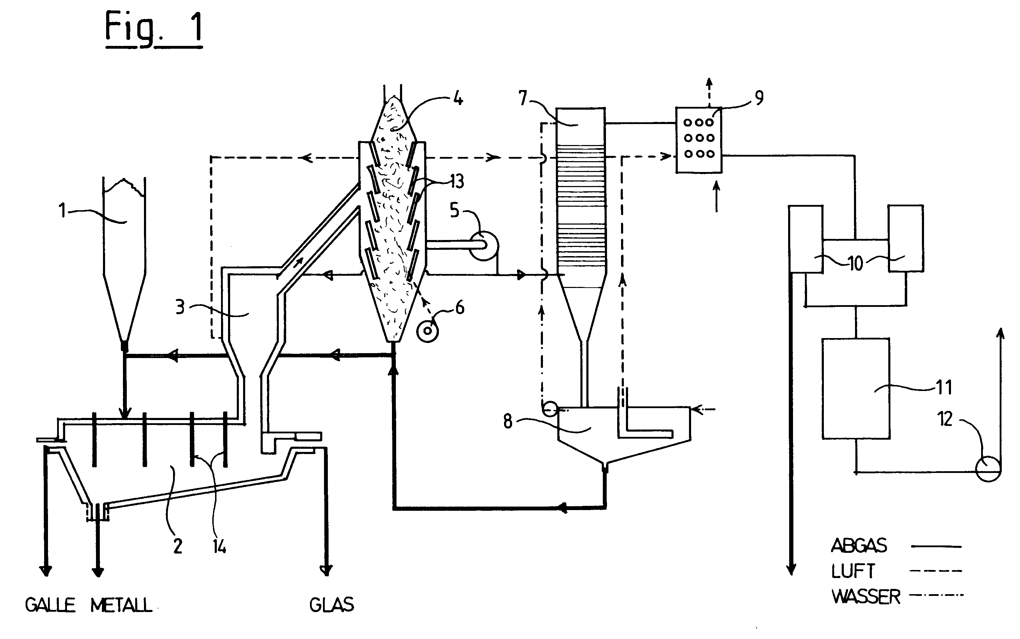

- Figur 1: das Fließschema des Verfahrens und

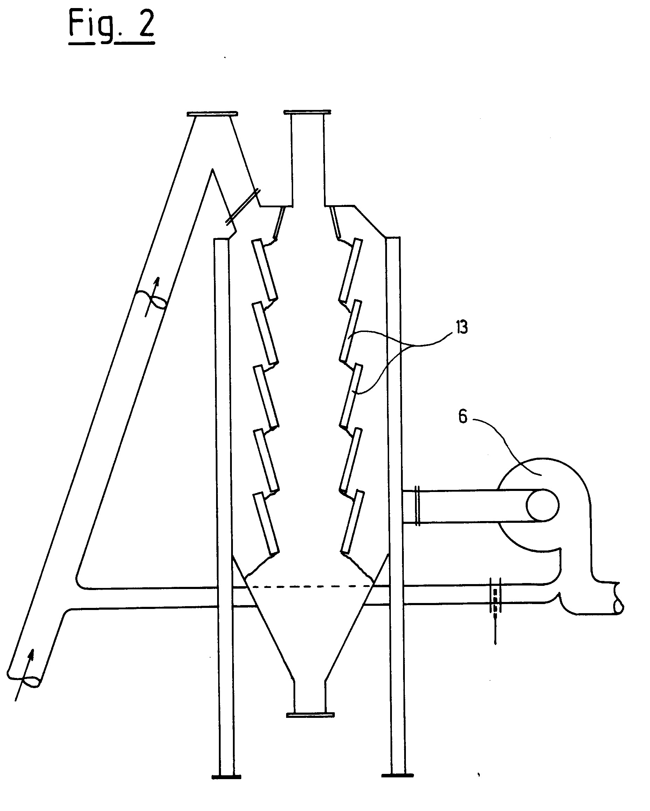

- Figur 2: einen Schnitt durch einen Gemengevorwärmer gemäß dem Vorrichtungsanspruch.

Die Lösung der genannten Probleme wird durch den Einsatz eines Gerätes erreicht, welches einen kombinierten Wärmetauscher, Kondensator und Heißgasfilter darstellt. Es wird nachstehend als Gemengevorwärmer bezeichnet.

Dieses Gerät wird hinter der Nachbrennkammer in unmittelbarer Nachbarschaft von dieser angeordnet und ist im Prinzip wie der bekannte Heißgasfilter nach DE-A-3 626 076 des Anmelders aufgebaut, wobei aber die seitlichen Führungsbleche als Kohlkörper ausgebildet sind, die von einem Kühlmedium, z. B. Luft, durchströmt werden. Zwar kondensiert das Abgas an den kalten Flächen, diese Flächen reinigen sich aber mindestens im Inneren ständig durch das von oben nachfließende Füllmaterial, das aus Zuschlagsoff, wie Sand, Phonolith oder Glasscherben besteht.

Das Abgas wird aus dem Gemengevorwärmer durch einen Heißgasventilator abgesaugt und die Abgastemperatur hinter dem Gemengevorwärmer wird so eingestellt, daß sie über dem jeweiligen Säuretaupunkt der Abgase liegt, da sonst erhebliche Korrosionsschäden am Gemengevorwärmer auftreten würden. Dies erfolgt durch Regelung der Kühlluftmenge. Weiterhin wird ein Teil des Abgases hinter dem Gemengevorwärmer abgezogen und vor dem Gemengevorwärmer in den Abgasstrom wieder eingebracht, so daß die Eingangstemperatur in den Gemengevorwärmer begrenzt wird, ohne daß die Gesamtabgasmenge im System ansteigt.

Die im Gemengevorwärmer erzeugte vorgewärmte Luft wird im Prozeß an drei Stellen verwendet. Ein Zweigstrom wird als Verbrennungsluft in der Nachbrennkammer 3 eingesetzt, um eine gute und vollständige Verbrennung des CO zu gewährleisten.

Ein zweiter Teilstrom wird dazu benutzt, einen abwasserfreien Waschprozeß dadurch zu erzeugen, daß der Schlamm aus dem Gaswäscher eingedickt wird, so daß er der Wanne wieder zugeführt werden kann.

Der dritte Teilstrom der erhitzten Luft wird einem Wärmetauscher zugeführt, um das Abgas hinter dem Gaswäscher auf eine Temperatur von etwa 80°C zu bringen. Es kann dann mit günstigster Temperatur durch die nachgeschalteten umschaltbaren Aktivkohlefilter geleitet werden.

Der verwendete Glasschmelzofen ist bereits aus älteren Offenlegungsschriften der Anmelderin bekannt. Er weist von oben in die Schmelze eintauchende Elektroden 14 auf, wobei das Glas durch einen Überlauf ebenso wie die darauf erzeugte Glasgalleschicht abgezogen wird.

Der tiefste Teil des Ofens weist einen Ablauf für Metalle auf, der diskontinuierlich arbeitet.

Das Gemenge wird über einen Gemengebunker 1 zugeführt, wobei in das in den Ofen eingegebene Gemenge durch das in dem Gememgevorwärmer vorgewärmte Gemenge und durch den Schlamm aus dem Eindicker des Gaswäschers angereichert wird.

Nahe dem Glasauslauf des Ofens 2 ist eine Nachbrennkammer 3 vorhanden, in der eine Temperatur von ca. 1000°C herrschen kann und in der nicht nur CO zu CO₂ umgewandelt wird, sondern in der auch eventuell vorhandene Dioxine und Furane sicher zerstört werden.

In die Rohrleitung zwischen der Nachbrennkammer 3 und dem Vorwärmer 4 wird abgekühltes Abgas aus dem Ventilator 5 eingeblasen, wodurch die Temperatur auf ca. 600°C herabgesetzt wird, so daß keine Überhitzung des Vorwärmers 4 auftreten kann.

Die Kammern 13 werden von Kühlluft durchströmt, die über den Frischluftventilator 6 angesaugt wird und die dann die Kammern nacheinander oder parallel durchströmt.

Die erwärmte Luft weist beim Austritt aus dem Vorwärmer eine Temperatur von 200°C auf und wird, wie vorstehend beschrieben, in drei Teilströme geteilt. Der Gaswäscher 7 ebenso wie der Eindicker 8 und der Wärmetauscher 9 entsprechen dem üblichen Stand der Technik und brauchen daher nicht näher beschrieben zu werden. Gleiches gilt für die umschaltbaren Aktivkohlefilter 10 und den gemeinsamen Aktivkohlefilter 11 sowie dem Reingasventilator 12.

In den Zeichnungen sind zur Verdeutlichung die Abgasströme, die Luftströme und der Wasserstrom des Eindickers getrennt gekennzeichnet.

Zur Adsorption von Chlor und Schwefel kann dem Material im Vorwärmer stückiger Brandkalk zugegeben werden, wodurch ein Teil dieser Stoffe direkt in die Wanne eingespeist wird. Dadurch kann unter bestimmten Umständen der Gaswäscher entfallen.

## Patentansprüche

1. Verfahren zum Verglasen von Abfallstoffen, die größere Anteile von Kohlenstoff enthalten, in einem elektrisch beheizten Glasschmelzofen (2), wobei das Abgas aus dem Glasschmelzofen zur Umwandlung von CO zu CO₂ nachverbrannt wird,
**dadurch gekennzeichnet,**
daß das Abgas aus der Nachverbrennung zur Aufheizung der Gemengebestandteile einem Gemengevorwärmer (4), der schräg von oben außen nach unten innen verlaufende, als Leitkörper für das Schüttgut dienende Kammern (13) aufweist, die von Luft durchströmt sind zugeführt wird, darin von Kaltluft gekühlt wird, daß die in dem Gemengevorwärmer (4) erhitzte Luft mit einer Temperatur zwischen 150°C und 400°C, vorzugsweise ca. 200°C austritt, und in einem Teilstrom der Nachverbrennung zugeführt wird, und daß das Abgas danach einer Gaswäsche sowie einer Endreinigung zugeführt wird.

2. Verfahren nach Anspruch 1, dadurch gekennzeichnet, daß ein aus dem Gemengevorwärmer (4) abgezogener weiterer Teilluftstrom einem Wärmetauscher (9) zugeführt wird, in dem er das Abgas auf eine für die Reinigung in einem Aktivkohlefilter (10, 11) geeignete Temperatur erhitzt.

3. Verfahren nach einem der Ansprüche 1 oder 2, dadurch gekennzeichnet, daß ein dritter Teil-Heißluftstrom in den Schlamm eines Gaswäschers (7) eingeführt wird und diesen soweit eindickt, daß er in den Glasschmelzofen (2) eingespeist werden kann.

4. Verfahren nach einem der vorherigen Ansprüche, dadurch gekennzeichnet, daß dem Gemenge in dem Gemengevorwärmer (4) zur Adsorption von Chlor und Schwefel stückiger Brandkalk zugegeben wird.

5. Vorrichtung zur Durchführung des Verfahrens nach einem der vorhergehenden Ansprüche mit einem elektrisch beheizten Glasschmelzofen (2) und einer Nachbrennkammer (3), dadurch gekennzeichnet, daß sie einen Gaswäscher (7) aufweist, mindestens einen Aktivkohlefilter (10, 11) und einen Gemengevorwärmer (4).

## Claims

1. Method for vitrifying residues containing larger amounts of carbon in an electrically heated glass melting furnace (2) wherein the exhaust gas from the glass melting furnace is afterburnt for the transition of CO to CO₂,
**characterized in**
that the exhaust gas from the afterburning for heating the glass batch parts is fed to a glass batch preheater (4) comprising chambers (13) serving as guiding members for the bulk material with the chambers extending obliquely from outside the top to inside the bottom, and streamed through by air, that the exhaust gas in the preheater is cooled by cold air, that the air heated in the glass batch preheater (4) streams out at a temperature between 150°C and 400°C, preferably about 200°C, and is fed to the afterburning in a partial stream, and that thereafter the exhaust gas is fed to a gas washer and a final purifying.

2. Method according to claim 1, characterized in that a further partial air stream drawn out of the glass batch preheater (4) is fed to a heat exchanger (9) wherein the partial air stream heats the exhaust gas to a temperature suitable for the cleaning in an activated carbon filter (10, 11).

3. Method according to one of the claims 1 or 2, characterized in that a third partial hot air stream is fed into the sludge of a gas waher (7) and thickens the sludge such that it may be fed to the glass melting furnace (2).

4. Method according to one of the preceeding claims, characterized in that lumpy unhydrated lime is fed to the glass batch in the glass batch preheater (4) to adsorb chlorine and sulfur.

5. Apparatus for accomplishing the method according to one of the preceeding claims with an electrically heated glass melting furnace (2), and an afterburning chamber (3), characterized in that the apparatus comprises a gas washer (7), at least one activated carbon filter (10, 11), and a glass batch preheater (4) comprising chambers (13) serving as guiding members for the bulk material with the chambers extending obliquely from outside the top to inside the bottom, and streamed through by air.

## Revendications

1. Procédé de vitrification de déchets qui contiennent des proportions élevées de produits carbonés, dans un four de vitrification (2) chauffé électriquement, procédé dans lequel le gaz effluent du four de vitrification est soumis à une post-combustion pour transformer le CO en CO₂, ce procédé étant caractérisé en ce que le gaz effluent de la post-combustion est conduit, pour réchauffer les composants du mélange, à un préchauffeur de mélange (4) qui comporte des chambres (13) qui sont balayées par de l'air et servent de corps de guidage pour le produit en vrac et qui sont disposées inclinées depuis leur partie haute extérieure jusqu'à leur partie basse intérieure, le gaz effluent étant refroidi dans le préchauffeur par de l'air froid, en ce que l'air réchauffé dans le préchauffeur de mélange (4) sort à une température comprise entre 150°C et 400°C, de préférence environ 200°C, et est conduit dans un courant partiel de la post-combustion, et en ce que le gaz effluent est ensuite conduit à un laveur de gaz ainsi qu'à un épurateur final.

2. Procédé selon la revendication 1, caractérisé en ce qu'un courant partiel d'air supplémentaire extrait du préchauffeur de mélange (4) est amené à un échangeur de chaleur (9), dans lequel il réchauffe le gaz effluent à une température appropriée pour l'épuration dans un filtre à charbon actif (10, 11).

3. Procédé selon l'une des revendications 1 ou 2, caractérisé en ce qu'un troisième courant partiel d'air chaud est injecté dans la boue d'un laveur de gaz (7) et épaissit celle-ci jusqu'au point où il est possible de l'introduire dans le four de vitrification (2).

4. Procédé selon l'une des revendications précédentes, caractérisé en ce que l'on ajoute au mélange dans le préchauffeur de mélange (4) de la chaux vive en morceaux pour l'adsorption du chlore et du soufre.

5. Dispositif pour la mise en oeuvre du procédé selon l'une des revendications précédentes, comprenant un four de vitrification (2) chauffé électriquement et une chambre de post-combustion (3), caractérisé en ce qu'il comporte un laveur de gaz (7), au moins un filtre à charbon actif (10, 11) et un préchauffeur de mélange (4) qui comporte des chambres (13) qui sont parcourues par de l'air et servent de corps de guidage pour le produit en vrac et qui sont disposées inclinées depuis leur partie haute extérieure jusqu'à leur partie basse intérieure.
